(19) Europäisches Patentamt

European Patent Office

Office européen des brevets

(11) EP 0 980 855 A2

## (12) EUROPEAN PATENT APPLICATION

(43) Date of publication:
23.02.2000 Bulletin 2000/08

(51) Int. Cl.⁷: C04B 35/109, C03B 5/43

(21) Application number: 99116112.6

(22) Date of filing: 18.08.1999

(84) Designated Contracting States:
AT BE CH CY DE DK ES FI FR GB GR IE IT LI LU MC NL PT SE
Designated Extension States:
AL LT LV MK RO SI

(30) Priority: 20.08.1998 JP 23478798

(71) Applicant:
Asahi Glass Company Ltd.
Chiyoda-ku, Tokyo 100-8305 (JP)

(72) Inventors:
• Arai, Tomonori
Takasago-shi, Hyogo (JP)
• Beppu, Yoshihisa,
Asahi Glass Company Ltd.
Yokohama-shi, Kanagawa 221-0863 (JP)

(74) Representative:
Müller-Boré & Partner
Patentanwälte
Grafinger Strasse 2
81671 München (DE)

(54) **Fused-cast-alumina-zirconia-silica refractory and method for evaluating it**

(57) A method for evaluating a fused-cast-alumina-zirconia-silica refractory for the properties as a furnace material, based on non-luminous object color represented by L*a*b* system as defined in JIS Z8729, which comprises representing the non-luminous object color of the fused-cast-alumina-zirconia-silica refractory by the psychometric lightness (L*) represented by one of coordinates in a three-dimensional color space having a perceptively substantially uniform rate, and/or the chroma index ($C^*_{ab}=(a^{*2}+b^{*2})^{1/2}$) as calculated from chromaticness indices a* and b* represented by two coordinates in the three-dimensional color space having a perceptively substantially uniform rate; comparing the psychometric lightness (L*) and/or the chroma index ($C^*_{ab}$) with preliminarily set ranges thereof, respectively; and judging that the fused-cast-alumina-zirconia-silica refractory is suitable as a furnace material when the psychometric lightness (L*) and/or the chroma index ($C^*_{ab}$) are within the set ranges.

EP 0 980 855 A2

Printed by Xerox (UK) Business Services
2.16.7/3.6

## Description

The present invention relates to a fused-cast-alumina-zirconia-silica refractory and a method for evaluating it. Particularly, the present invention relates to a method for evaluating a fused-cast-alumina-zirconia-silica refractory, capable of quickly measuring the properties of a fused-cast-alumina-zirconia-silica refractory as a furnace material without destruction, and a fused-cast-alumina-zirconia-silica refractory evaluated by the method.

Fused-cast refractories can be classified into an alumina-zirconia-silica type, an alumina type, a high zirconia type, etc., in view of chemical composition. These refractories are prepared in such a manner that a material is melted, for example, in an arc electric furnace, and the melt is cast into a casting mold, followed by cooling to room temperature for solidification. Accordingly, such refractories have a dense and developed crystal structure. Accordingly, they are preferably used as a furnace material for glass melting furnace, and they are excellent in corrosion resistance and has low glass fouling properties, as compared with a usual bonded refractory.

Among these, a fused-cast-alumina-zirconia-silica refractory comprises alumina, zirconia and silica as the main components, and a small amount of a sodium oxide component, and has a structure in which a matrix glass phase of a sodium aluminosilicate composition comprising the silica component, surrounds crystal phases of baddeleyte, corundum and their eutectic, utilizing mineralogical characteristics.

However, a relatively large amount of the matrix glass is contained, and the matrix glass itself or a reaction product thereof is likely to exude out of the refractory at a high temperature. This phenomenon causes glass defects, such as knots, cords, stones and blisters directly or indirectly, which reduce productivity of the glass.

Heretofore, many proposals have been made to reduce exudation of the matrix glass. Among these, it is effective to increase the degree of oxidation of a refractory (more specifically, to shift the degree of reduction-oxidation towards the oxidation side).

For example, the starting material is made into fine particles to increase the specific surface area thereby to increase the degree of oxidation, and an oxidizing gas is adsorbed thereon (JP-B-5-8143), an oxidizing agent is added to the starting material (JP-B-5-30793), the content of impurities such as oxides of Fe and oxides of Ti in the starting material, is reduced (JP-B-4-26928), and the content of not only such impurities but also other impurities (such as Cr or Cu) is reduced (JP-B-5-7350).

Further, in recent years, a method has been proposed wherein as an oxidizing agent, tin oxide, antimony oxide, cerium oxide or the like is added to the starting material (JP-A-10-67570, JP-A-10-72264).

When the degree of oxidation is increased as mentioned above, a method to evaluate the degree (the degree of oxidation-reduction) is necessary. There is no quantitative method for evaluating the degree of oxidation-reduction so far. Usually, the color tone changes depending upon the degree of oxidation-reduction. Experientially, it is said that with the increase in the degree of oxidation, the color changes to gray, white and orange in this order, and in many cases, the latter is superior in the properties as a furnace material. It is considered that substances which decrease the degree of oxidation are unsaturated oxides of $Fe_2O_3$, $TiO_2$ and $ZrO_2$, carbon and carbides. However, a detailed study has not been made.

To evaluate fouling of melted glass due to e.g. the degree of oxidation when the refractory is used for a glass melting furnace, it is a good method to measure the amount of exudation of the matrix glass. Conventionally, to measure the amount of exudation of the matrix glass, a method to evaluate the amount of the exudation by the change in volume before and after the heating, has been widely used. However, the measuring method was not necessarily quantitative. Accordingly, a more quantitative method has been proposed (Refractory 48(11)624 1996, JP-A-10-132724).

This is a quantitative measuring method to evaluate the amount of exudation of the matrix glass by a weight change of the refractory by heating, and it is particularly excellent as an evaluation method to study the exudation mechanism.

However, in this method, as a processing and a heating of the sample are required, a certain time and labor are required. Further, the sample is extracted from the part of a refractory. Accordingly, the measurement is difficult in a refractory which is practically used for a glass melting furnace.

The present invention has been made on the basis of the above problems of prior art, and it is an object of the present invention to provide a method for evaluating a fused-cast-alumina-zirconia-silica refractory, capable of quickly measuring the properties of the fused-cast-alumina-zirconia-silica refractory as a furnace material without destruction, and a fused-cast-alumina-zirconia-silica refractory evaluated by the method.

The present invention provides a method for evaluating a fused-cast-alumina-zirconia-silica refractory for the properties as a furnace material, based on non-luminous object color represented by L*a*b* system as defined in JIS Z8729, which comprises representing the non-luminous object color of the fused-cast-alumina-zirconia-silica refractory by the psychometric lightness (L*) represented by one of coordinates in a three-dimensional color space having a perceptively substantially uniform rate, and/or the chroma index ($C^*_{ab}=(a^{*2}+b^{*2})^{1/2}$) as calculated from chromaticness indices a* and b* represented by two coordinates in the three-dimensional color space having a perceptively substantially uniform rate; comparing the psychometric lightness (L*) and/or the chroma index ($C^*_{ab}$) with preliminarily set ranges thereof, respectively; and judging that the fused-cast-alumina-zirconia-silica refractory is suitable as a furnace material when the psychometric lightness (L*) and/or the chroma index ($C^*_{ab}$) are within the set ranges.

It has been experimentally confirmed that the psychometric lightness (L*) and the chroma index ($C^*_{ab}$) which represent the non-luminous object color of the fused-cast-alumina-zirconia-silica refractory, have a strong relation between the properties of a fused-cast-alumina-zirconia-silica refractory as a furnace material. Accordingly, the non-luminous object color of a fused-cast-alumina-zirconia-silica refractory is measured based on L*a*b* system as defined in JIS Z8729. The properties as a furnace material are evaluated based on the psychometric lightness (L*) and the chroma index ($C^*_{ab}$). The chroma index ($C^*_{ab}$) is calculated by the formula ($C^*_{ab}=(a^{*2}+b^{*2})^{1/2}$) from chromaticness indices a* and b*.

Then, the psychometric lightness (L*) and/or the chroma index ($C^*_{ab}$) are compared with preliminarily set ranges thereof, respectively. When the psychometric lightness (L*) and/or the chroma index ($C^*_{ab}$) are within the set ranges, the fused-cast-alumina-zirconia-silica refractory is judged to be suitable as a furnace material. When both the psychometric lightness (L*) and the chroma index ($C^*_{ab}$) are within the set ranges thereof, respectively, almost all changes in color tone as the non-luminous object color can thereby be optically substantially covered, such being most preferred to evaluate the properties as a furnace material. However, in a case where each of psychometric lightness (L*) and the chroma index ($C^*_{ab}$) is separately evaluated, there is no substantial change in the results of evaluation for the properties as a furnace material. Accordingly, the evaluation can be carried out by employing either the psychometric lightness (L*) or the chroma index ($C^*_{ab}$).

As mentioned above, the properties of the fused-cast-alumina-zirconia-silica refractory as a furnace material can be quickly measured by the lightness and chromaticness without destruction. Accordingly, the reliability of the quality of the fused-cast-alumina-zirconia-silica refractory can be secured.

In the present invention, the furnace material is used for a glass melting furnace.

As a furnace material to be used for a glass melting furnace, usually a furnace material having a high degree of oxidation is employed. Accordingly, the properties as a furnace material due to the degree of oxidation are evaluated by the psychometric lightness (L*) and the chroma index ($C^*_{ab}$).

Further, in the present invention, the properties as a furnace material are exudation characteristic of the matrix glass and/or blister characteristic.

It has been experimentally confirmed that exudation characteristic of the matrix glass and blister characteristic have a close relation between the psychometric lightness (L*) and the chroma index ($C^*_{ab}$). The psychometric lightness (L*) and the chroma index ($C^*_{ab}$) are measured, and they can represent exudation characteristic of the matrix glass and blister characteristic.

As mentioned above, exudation characteristic of the matrix glass and blister characteristic, as representative properties of a fused-cast-alumina-zirconia-silica refractory as a furnace material, can easily be estimated by measuring the lightness and the chromaticness.

Further, in the present invention, the set range of the psychometric lightness (L*) is at least 87.0, and the set range of the chroma index ($C^*_{ab}$) is at least 6.00.

In control of the quality, by adjusting the set range of the psychometric lightness (L*) to be at least 87.0, and the set range of the chroma index ($C^*_{ab}$) to be at least 6.00, reliability in the quality of the fused-cast-alumina-zirconia-silica refractory as a furnace material can be secured. When the furnace material is used for a glass melting furnace, fouling of the glass can be reduced during the operation of the glass furnace, and the rate of occurrence of sudden foulings of the glass can be reduced.

The present invention further provides a fused-cast-alumina-zirconia-silica refractory to be used for a glass melting furnace, having its properties as a furnace material including exudation characteristic of the matrix glass and/or blister characteristic evaluated based on non-luminous object color represented by L*a*b* system as defined in JIS Z8729, which has a psychometric lightness (L*) represented by one of coordinates in a three-dimensional color space having a perceptively substantially uniform rate as calculate from the non-luminous object color being within a set range of at least 87.0, and/or a chroma index ($C^*_{ab}=(a^{*2}+b^{*2})^{1/2}$) as calculated from chromaticness indices a* and b* represented by two coordinates in the three-dimensional color space having a perceptively substantially uniform rate being within a set range of at least 6.00.

In the drawings:

Figure 1 is a graph illustrating the relation between the psychometric lightness and the exudation of the matrix glass.
Figure 2 is a graph illustrating the relation between the chroma index and the exudation of the matrix glass.
Figure 3 is a graph illustrating the evaluation of the exudation index based on the normal level, with reference to the psychometric lightness and the chroma index.
Figure 4 is a graph illustrating the relation between the psychometric lightness and the number of remaining blisters.

Figure 5 is a graph illustrating the relation between the chroma index and the number of remaining blisters.

Figure 6 is a graph illustrating the evaluation of the blister index based on the normal level, with reference to the psychometric lightness and the chroma index.

Now, the mode for carrying out the present invention will be explained.

A fused-cast-alumina-zirconia-silica refractory contains $Al_2O_3$, $ZrO_2$ and $SiO_2$ as the main components, $Na_2O$ as a minor component, and a trace of e.g. $Fe_2O_3$ and $TiO_2$ as impurities, in view of chemical composition.

However, the present invention can be applied to one containing, instead of $Na_2O$, an alkali metal oxide or an alkaline earth metal oxide, or one containing an oxidizing agent or a small amount of additive which changes the properties of the refractory in the starting material, regardless of it remains in the melted ingot or not, as disclosed in JP-A-5-30793, JP-A-10-67570, JP-A-10-72264.

The non-luminous object color of the fused-cast-alumina-zirconia-silica refractory is measured in accordance with JIS Z8722 by employing a color-difference colorimeter (such as model CR-300 manufactured by MINOLTA CO., LTD). Here, in JIS Z8722, a method is defined wherein the non-luminous object color is measured based on a standard colorimetric system.

Based on JIS Z8729, the psychometric lightness (L*) and the chroma index ($C^*_{ab}=(a^{*2}+b^{*2})^{1/2}$) in L*a*b* system of the color can be obtained. Here, in JIS Z8729, a method is defined wherein the non-luminous object color is represented by L*a*b* system (a color space having a perceptively substantially uniform rate as recommended by International Commission on Illumination in 1976).

Now, the correlation of the non-luminous object color of the fused-cast-alumina-zirconia-silica refractory (L*a*b* system of the color based on JIS Z8729) with the properties as a furnace material such as exudation characteristic of the matrix glass and blister characteristic, will be explained.

The present inventors have conducted measurements with respect to the color of the fused-cast-alumina-zirconia-silica refractory in L*a*b* system of the color based on JIS Z8729. They have further measured the properties as a furnace material such as exudation characteristic of the matrix glass and blister characteristic, and analyzed their correlation.

As a result, they have found a strong correlation of the psychometric lightness (L*) and the chroma index ($C^*_{ab}=(a^{*2}+b^{*2})^{1/2}$) in L*a*b* system of the color based on JISZ 8729, with the properties as a furnace material such as exudation characteristic of the matrix glass and blister characteristic. Accordingly, by measuring and calculating the psychometric lightness (L*) and the chroma index ($C^*_{ab}=(a^{*2}+b^{*2})^{1/2}$) based on JIS Z8729, the properties as a furnace material can preliminarily be evaluated by e.g. exudation characteristic of the matrix glass and blister characteristic.

This method can be carried out without destruction, and accordingly this method can be applied to a refractory which is practically used for a glass melting furnace. With respect to such a refractory, the color tone usually varies depending upon the portion in an ingot, and the ingot is large as compared with the range of a measured point. In such a case, it is preferred to carry out the measurement with respect to many points.

By considering the use properties of the refractory and determining the portions to be used, based on the psychometric lightness and the chroma index measured by this method, the refractory can be used reasonably, and the fouling of the glass can be reduced.

Several types of fused-cast-alumina-zirconia-silica refractories with different $ZrO_2$ contents (for example, 31-44 wt%), can be commercially available. The amount of exudation of the matrix glass in such refractories is usually at a level of about 1.0 wt% at 1,500°C over a period of 48 hours. However, in some cases, a refractory in gray color, which is poor in exudation characteristic of the matrix glass and blister characteristic, which has an amount of exudation of the matrix glass of 3 wt% at 1,500°C in 48 hours, may be obtained by some problems in the production.

With respect to such a refractory which is not normal, the psychometric lightness (L*) and the chroma index ($C^*_{ab}=(a^{*2}+b^{*2})^{1/2}$) are measured based on JIS Z8729, and many of such refractories have a psychometric lightness (L*) of less than 87.0 and a chroma index ($C^*_{ab}$) of less than 6.00. Accordingly, with respect to a fused-cast-alumina-zirconia-silica refractory having a psychometric lightness (L*) of at least 87.0 or a chroma index ($C^*_{ab}$) of at least 6.00, preferably a refractory having a psychometric lightness (L*) of at least 87.0 and a chroma index ($C^*_{ab}$) of at least 6.00, at least the properties thereof as a furnace material are not abnormal.

Accordingly, by using a refractory having a psychometric lightness (L*) of at least 87.0 or a chroma index ($C^*_{ab}$) of at least 6.00, more preferably a refractory having a psychometric lightness (L*) of at least 87.0 and a chroma index ($C^*_{ab}$) of at least 6.00 alone, in control of the quality, reliability in the quality can be secured, the fouling of the glass during the operation of the glass furnace can be reduced, and the rate of occurrence of sudden foulings of the glass can be reduced.

Now, the present invention will be described in further detail with reference to Examples. However, it should be understood that the present invention is by no means restricted to such specific Examples.

Examples for a method for preparing samples to be used for the measurements in the present invention, are shown below. Zircon, silica-removed zircon, Bayer's process alumina, silica sand, sodium carbonate and partially oxidized tin were weighed in a predetermined amounts and mixed.

The mixture of the starting materials was melted at about 1,900°C by an electric furnace of 500 kVA or 3,400 kVA at its maximum having graphite electrodes, and at the completion of the melting, oxygen was lanced into the melt at a rate of from 0 $\ell$/kg to 5.0 $\ell$/kg to change the degree of oxidation, followed by casting into a mold. The mold was made of sand, and preliminarily embedded in a silica-alumina hollow ball, and the size was A, B or C, as shown in Table 1.

Table 1

| Mold | Size (mm) |
|------|-----------|
| A | 250×450×1,200 |
| B | 250×350×650 |
| C | 230×200×230 |

The compositions of the obtained ingots can be classified into the four classes, as shown in Table 2.

Table 2

| Composition | Chemical component (wt%) | | | | |
|-------------|--------------------------|------------------|------------------|-------------------|------------------|
| | $Al_2O_3$ | $ZrO_2$ | $SiO_2$ | $Na_2O$ | $SnO_2$ |
| 1 | 51.0-55.0 | 31.0-34.0 | 12.0-13.5 | 1.20-1.40 | 0.00 |
| 2 | 49.0-52.0 | 33.0-36.0 | 12.0-13.5 | 1.60-1.95 | 0.00 |
| 3 | 42.0-50.0 | 38.0-44.0 | 10.0-12.0 | 1.00-1.20 | 0.00 |
| 4 | 51.0-55.0 | 31.0-34.0 | 12.0-13.5 | 1.20-1.40 | 0.20-0.30 |

Then, the ingot was cut or polished to remove the outer skin portion or to obtain a surface required for evaluation. With respect to such a surface, the psychometric lightness (L*) and the chroma index ($C^*_{ab}=(a^{*2}+b^{*2})^{1/2}$) were obtained by using a color-difference colorimeter. The results were not changed even after the treatments to measure exudation characteristic of the matrix glass and blister characteristic as mentioned hereinafter. The results in measurement with respect to the color, were represented by one obtained immediately before the following evaluation tests, for convenience.

The amount of exudation of the matrix glass (hereinafter referred to simply as exudation) was measured with respect to 30 samples (Examples 1 to 30) based on the above described measuring method (Refractory 48(11)624 1996) as shown in Table 3.

Table 3

| Ex. | Chemical composition 1) | Mold 2) | Items with respect to color | | | | Exudation (wt%) |
|---|---|---|---|---|---|---|---|
| | | | L* | a* | b* | c* | |
| 1 | 1 | A | 90.69 | 0.42 | 7.93 | 7.94 | 1.18 |
| 2 | 1 | A | 89.66 | 1.10 | 10.13 | 10.19 | 0.69 |
| 3 | 1 | A | 89.38 | 0.96 | 9.89 | 9.94 | 0.82 |
| 4 | 1 | A | 89.68 | 0.21 | 5.01 | 5.01 | 1.15 |
| 5 | 1 | B | 89.66 | 1.13 | 10.74 | 10.80 | 0.78 |
| 6 | 1 | B | 84.44 | -0.18 | 1.51 | 1.52 | 1.49 |
| 7 | 1 | B | 85.31 | -0.14 | 2.81 | 2.81 | 1.68 |
| 8 | 1 | B | 88.54 | 0.08 | 4.97 | 4.97 | 0.63 |
| 9 | 1 | B | 88.71 | 1.17 | 11.79 | 11.85 | 0.89 |
| 10 | 1 | C | 87.23 | 2.64 | 14.43 | 14.67 | 0.93 |
| 11 | 1 | C | 88.96 | 2.25 | 12.87 | 13.07 | 0.72 |
| 12 | 1 | C | 84.68 | 0.24 | 4.30 | 4.31 | 1.52 |
| 13 | 1 | C | 88.52 | 0.60 | 7.82 | 7.84 | 0.73 |
| 14 | 1 | C | 87.96 | 0.55 | 7.57 | 7.59 | 0.76 |
| 15 | 1 | C | 85.26 | 0.84 | 5.07 | 5.14 | 1.35 |
| 16 | 1 | C | 83.69 | 0.68 | 4.68 | 4.73 | 1.54 |
| 17 | 1 | C | 80.69 | -0.56 | 2.01 | 2.09 | 2.51 |
| 18 | 1 | C | 81.50 | -0.22 | 3.05 | 3.06 | 2.15 |
| 19 | 2 | B | 89.94 | 0.30 | 7.24 | 7.25 | 0.79 |
| 20 | 2 | B | 89.05 | 1.57 | 11.19 | 11.30 | 0.86 |
| 21 | 2 | B | 90.18 | 0.11 | 5.91 | 5.91 | 1.06 |
| 22 | 2 | B | 90.34 | 0.52 | 7.93 | 7.95 | 0.75 |
| 23 | 2 | A | 85.64 | 0.12 | 3.53 | 3.53 | 2.07 |
| 24 | 2 | C | 84.23 | 0.35 | 4.67 | 4.68 | 2.23 |
| 25 | 3 | A | 89.32 | 0.35 | 8.63 | 8.64 | 0.65 |
| 26 | 3 | A | 88.51 | 0.81 | 10.11 | 10.14 | 0.63 |
| 27 | 3 | A | 88.65 | 1.31 | 12.12 | 12.19 | 0.75 |
| 28 | 3 | A | 88.06 | 3.01 | 15.12 | 15.42 | 0.80 |
| 29 | 4 | C | 88.84 | 0.56 | 8.05 | 8.07 | 0.39 |
| 30 | 4 | C | 89.32 | 0.48 | 8.69 | 8.70 | 0.30 |

1) Classification as defined in Table 2

2) Classification as defined in Table 1

Each sample with a diameter of 30 mm was scooped out from the ingot by a core drill, followed by shear processing to obtain a cylinder with a height of 30 mm. The psychometric lightness and the chroma index were measured, and the exudation was measured. The heat treatment was carried out at a temperature of 1500°C for 48 hours, and the exudation is represented by a percentage of the decrease of the weight by heating. The results are shown in Table 3.

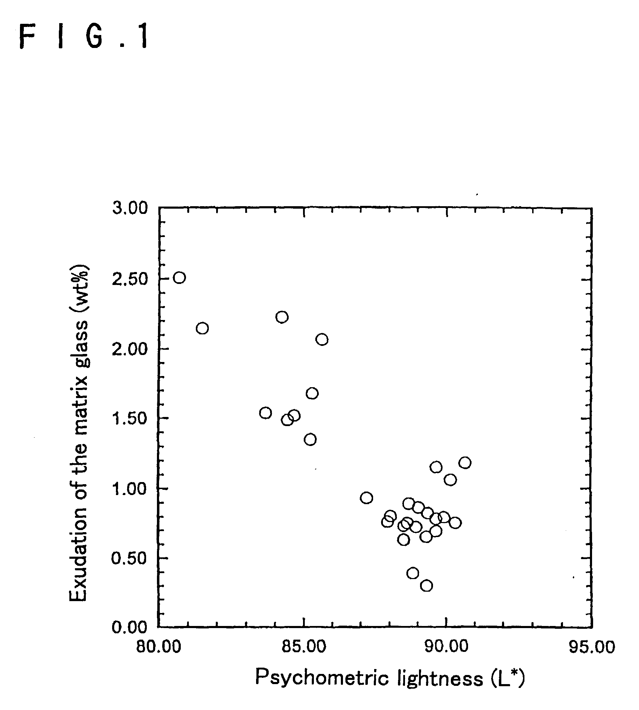

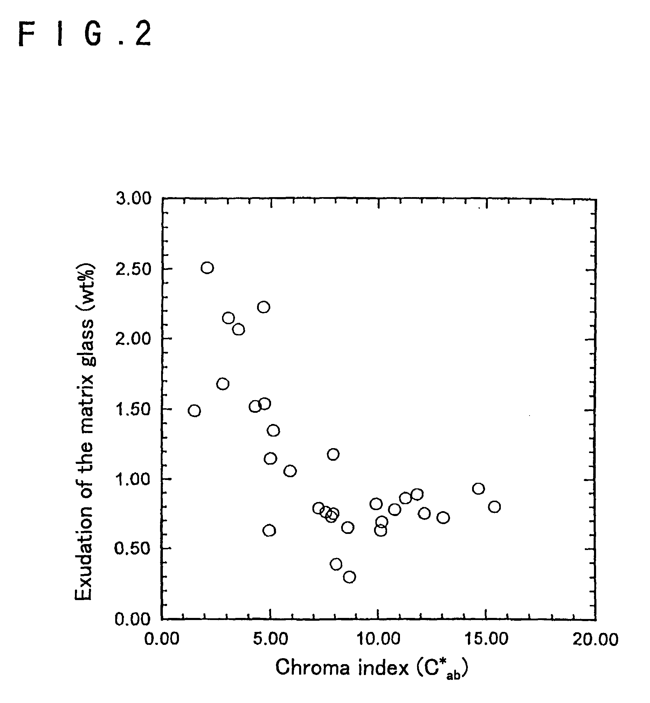

The relation between the psychometric lightness and the exudation, and the relation between the chroma index and the exudation, are shown in Figure 1 and Figure 2, respectively. As evident from Figure 1 and Figure 2, the psychometric lightness and the chroma index have strong correlation with the exudation, and it is apparent that the psychometric lightness and the chroma index are suitable for evaluating the exudation characteristic of the matrix glass.

As mentioned above, with respect to the fused-cast-alumina-zirconia-silica refractory, the exudation after the heat treatment at 1500°C for 48 hours is usually at a level of about 1.0 wt%, regardless of the $ZrO_2$ content. The exudation shown in Table 3 is represented by the exudation index classified on the basis of the normal level, as shown in Table 4, and the relation of the exudation index with the psychometric lightness and the chroma index was studied.

Table 4

| Exudation (wt%) | Exudation index | Remarks |
|---|---|---|
| EX<0.50 | EX1 | Excellent |
| 0.50≦EX<1.00 | EX2 | Normal, good |
| 1.00≦EX<1.50 | EX3 | Normal, slightly poor |
| 1.50≦EX | EX4 | Poor |

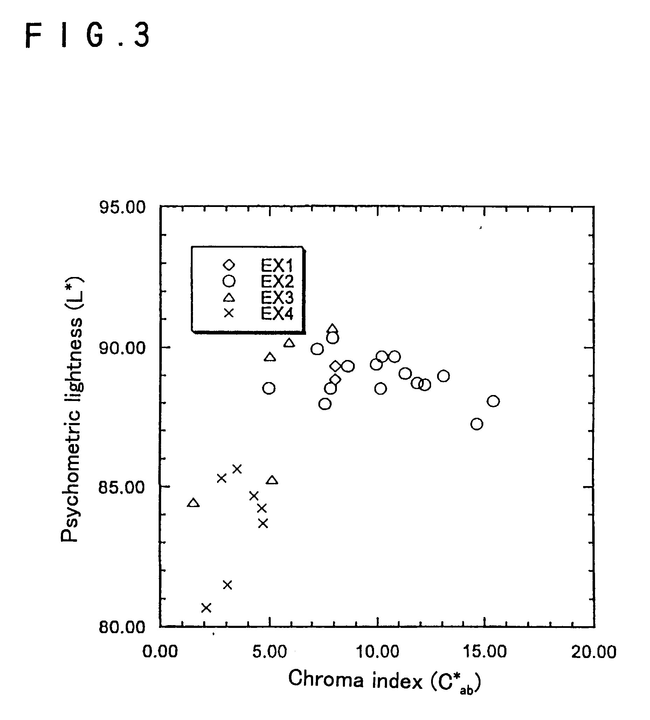

The results are shown in Figure 3. With respect to the exudation index (EX1 to EX4), the smaller the number, the better. As evident form Figure 3, when the psychometric lightness (L*) is at least 87.0 and/or the chroma index ($C*_{ab}$) is at least 6.00, no sample having a poor exudation characteristic of the matrix glass was observed. Accordingly, it is apparent that a refractory satisfying such a definition is a refractory having an excellent exudation characteristic of the matrix glass, and the above set ranges can be applied to a method for controlling the quality.

Further, the blister characteristic was evaluated by using disk-like samples with a diameter of 35 mm, which were scooped out from the ingot by a core drill, followed by shear processing to adjust the width to be 5 mm. With respect to these samples, the psychometric lightness and the chroma index were measured. Then, on each of these samples, a ring made of the same material and processed to have an inner diameter of 30 mm, an outer diameter of 35 mm and a height of 8 mm, was put. 10 g of a cathode ray tube glass was put therein, followed by heating at 1500°C for 48 hours, whereupon the number of blisters remaining in the cathode ray tube glass was measured by an optical microscope, and calculated as the number per $cm^2$. The evaluation was carried out with respect to 18 samples (Examples 51 to 68), and the results are shown in Table 5.

Table 5

| Ex. | Chemical composition 1) | Mold 2) | Items with respect to color | | | | Number of remaining blisters (per cm$^2$) |
|---|---|---|---|---|---|---|---|
| | | | L* | a* | b* | c* | |
| 51 | 1 | A | 89.65 | 0.41 | 7.95 | 7.96 | 140 |
| 52 | 1 | A | 89.43 | 1.08 | 10.10 | 10.16 | 120 |
| 53 | 1 | A | 89.30 | 0.97 | 9.92 | 9.97 | 110 |
| 54 | 1 | C | 84.65 | 0.26 | 4.31 | 4.32 | 170 |
| 55 | 1 | C | 88.34 | 0.59 | 7.83 | 7.85 | 100 |
| 56 | 1 | C | 87.90 | 0.55 | 7.53 | 7.55 | 100 |
| 57 | 1 | C | 80.69 | -0.55 | 2.01 | 2.08 | 250 |
| 58 | 1 | C | 81.52 | -0.21 | 3.08 | 3.09 | 240 |
| 59 | 2 | B | 90.20 | 0.20 | 5.90 | 5.90 | 120 |
| 60 | 2 | B | 90.35 | 0.56 | 7.95 | 7.97 | 120 |
| 61 | 2 | A | 85.82 | 0.12 | 3.49 | 3.49 | 200 |
| 62 | 2 | C | 84.33 | 0.38 | 4.68 | 4.70 | 240 |
| 63 | 3 | A | 89.38 | 0.37 | 8.68 | 8.69 | 90 |
| 64 | 3 | A | 88.49 | 0.82 | 10.12 | 10.15 | 80 |
| 65 | 3 | A | 88.63 | 1.27 | 12.09 | 12.16 | 110 |
| 66 | 3 | A | 88.10 | 3.05 | 15.15 | 15.45 | 100 |
| 67 | 4 | C | 88.85 | 0.55 | 8.06 | 8.08 | 40 |
| 68 | 4 | C | 89.30 | 0.48 | 8.71 | 8.72 | 30 |

1) Classification as defined in Table 2

2) Classification as defined in Table 1

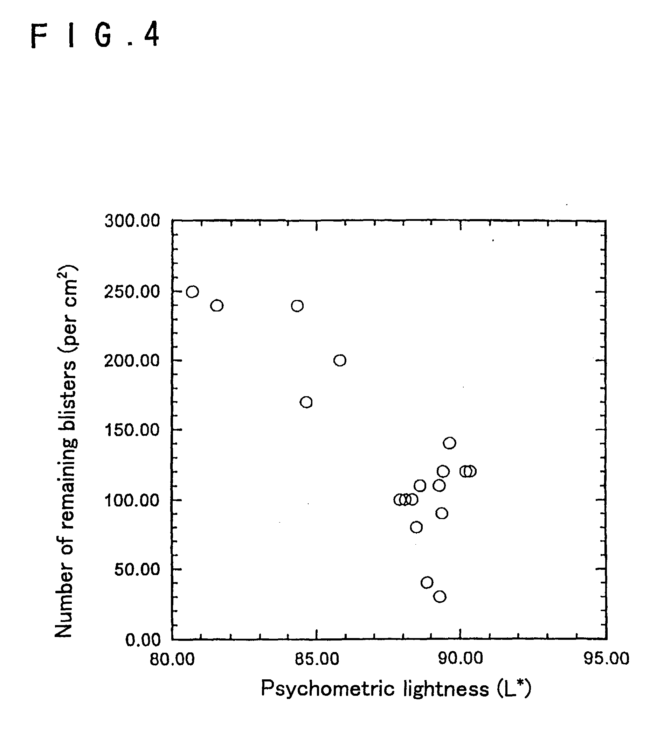

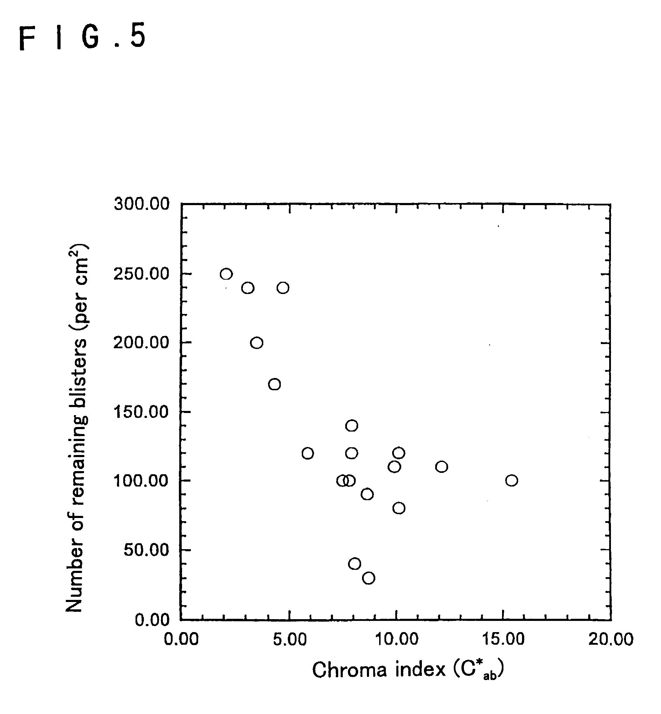

The relation between the psychometric lightness and the number of remaining blisters, and the relation between the chroma index and the number of remaining blisters, are shown in Figure 4 and Figure 5, respectively. As evident from Figure 4 and Figure 5, the psychometric lightness and the chroma index have strong correlation with the number of remaining blisters, i.e. the blister characteristic. Accordingly, it is apparent that the psychometric lightness and the chroma index are suitable for evaluating the blister characteristic.

The number of blisters remaining in the cathode ray tube glass after the heating at 1500°C for 48 hours is at a level of about 150 per cm$^2$, in the present testing method. The number of remaining blisters shown in Table 5 was represented by the blister index classified on the basis of the normal level, as shown in Table 6, and the relation of the blister index with the psychometric lightness and the chroma index was studied.

Table 6

| Number of blisters per cm$^2$ | Blister index | Remarks |
|---|---|---|
| BL<100 | BL 1 | Excellent |
| 100≦BL<150 | BL 2 | Normal, good |
| 150≦BL<200 | BL 3 | Normal, slightly poor |
| 200≦BL | BL 4 | Poor |

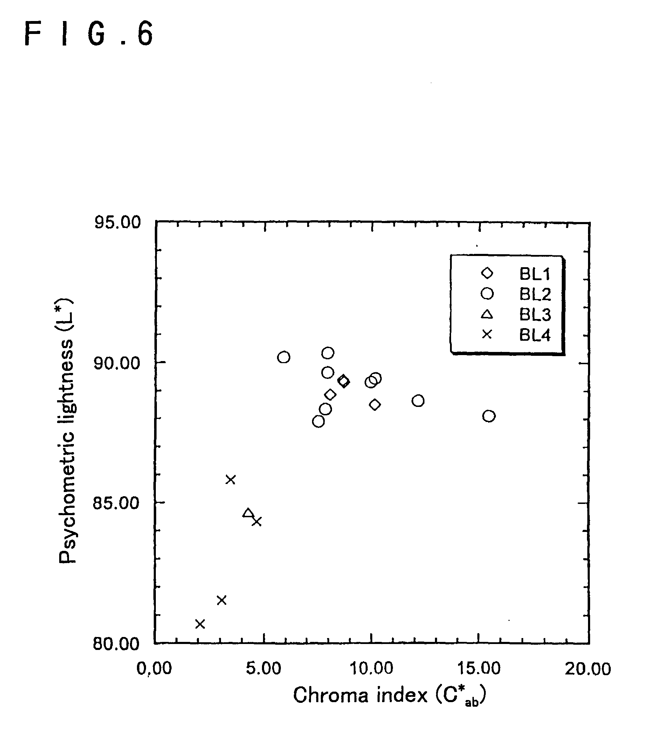

The results are shown in Figure 6. With respect to the blister index (BL1 to BL4), the smaller the number, the better the blister characteristic.

As evident form Figure 6, when the psychometric lightness (L*) is at least 87.0 and/or the chroma index ($C^*_{ab}$) is at least 6.00, no sample having a poor blister characteristic was observed. Accordingly, it is apparent that a refractory satisfying such a definition is a refractory having an excellent blister characteristic, and the above set ranges can be applied to a method for controlling the quality.

As mentioned above, the definition was made wherein the psychometric lightness (L*) is at least 87.0 and/or the chroma index ($C^*_{ab}$) is at least 6.00. Such ranges were set based on the above mentioned conditions for evaluating the exudation characteristic of the matrix glass and the blister characteristic. However, the ranges are not restricted to such specific evaluation conditions. Accordingly, the ranges may change depending upon the conditions under which the refractory is used, such as temperature, atmosphere and portion.

Further, with respect to a large refractory, in the case where measurement was carried out with respect to several portions, a statistical process of the psychometric lightness and the chroma index (such that the average value is taken as the central value, or the minimum value is considered), and the definition ranges based on the statistical process, are not particularly limited.

As mentioned above, the properties of the fused-cast-alumina-zirconia-silica as a furnace material, such as the exudation characteristic of the matrix glass and the blister characteristic, due to the degree of oxidation, can accurately and quickly be measured without destruction. Accordingly, reliability in the quality can be secured, and the fouling of the melted glass can be reduced.

As explained above, in accordance with the present invention, the properties of a fused-cast-alumina-zirconia-silica refractory as a furnace material can be evaluated by measuring the psychometric lightness (L*) and the chroma index ($C^*_{ab}$) as the non-luminous object color, and by comparing them with the preliminarily set ranges thereof, respectively. Accordingly, the properties as a furnace can quickly be measured without destruction.

**Claims**

1. A method for evaluating a fused-cast-alumina-zirconia-silica refractory for the properties as a furnace material, based on non-luminous object color represented by L*a*b* system as defined in JIS Z8729, which comprises representing the non-luminous object color of the fused-cast-alumina-zirconia-silica refractory by the psychometric lightness (L*) represented by one of coordinates in a three-dimensional color space having a perceptively substantially uniform rate, and/or the chroma index ($C^*_{ab}=(a^{*2}+b^{*2})^{1/2}$) as calculated from chromaticness indices a* and b* represented by two coordinates in the three-dimensional color space having a perceptively substantially uniform rate; comparing the psychometric lightness (L*) and/or the chroma index ($C^*_{ab}$) with preliminarily set ranges thereof, respectively; and judging that the fused-cast-alumina-zirconia-silica refractory is suitable as a furnace material when the psychometric lightness (L*) and/or the chroma index ($C^*_{ab}$) are within the set ranges.

2. The method for evaluating a fused-cast-alumina-zirconia-silica refractory, according to Claim 1, wherein the furnace material is used for a glass melting furnace.

3. The method for evaluating a fused-cast-alumina-zirconia-silica refractory, according to Claim 1 or 2, wherein the properties as a furnace material are exudation characteristic of the matrix glass and/or blister characteristic.

4. The method for evaluating a fused-cast-alumina-zirconia-silica refractory, according to Claim 1, 2 or 3, wherein the set range of the psychometric lightness (L*) is at least 87.0, and the set range of the chroma index ($C^*_{ab}$) is at least 6.00.

5. A fused-cast-alumina-zirconia-silica refractory to be used for a glass melting furnace, having its properties as a furnace material including exudation characteristic of the matrix glass and/or blister characteristic evaluated based on non-luminous object color represented by L*a*b* system as defined in JIS Z8729, which has a psychometric lightness (L*) represented by one of coordinates in a three-dimensional color space having a perceptively substantially uniform rate as calculated from the non-luminous object color being within a set range of at least 87.0, and/or a chroma index ($C^*_{ab}=(a^{*2}+b^{*2})^{1/2}$) as calculated from chromaticness indices a* and b* represented by two coordinates in the three-dimensional color space having a perceptively substantially uniform rate being within a set range of at least 6.00.

# F I G . 1

# F I G . 2

Chroma index ($C^*_{ab}$) vs Exudation of the matrix glass (wt%)

# F I G . 3

# F I G . 4

# F I G . 5

# F I G . 6